# EUROPEAN PATENT SPECIFICATION

(11) **EP 4 399 898 B1**
(45) Date of publication and mention of the grant of the patent: **27.08.2025**
(21) Application number: 22789164.5
(22) Date of filing: 06.09.2022
(51) Int. Cl.: H04W 12/037, H04W 12/041, H04W 12/122

(54) **ENHANCED MECHANISM FOR A SECURE RANDOM-ACCESS PROCEDURE**
VERBESSERTER MECHANISMUS FÜR EIN SICHERES DIREKTZUGRIFFSVERFAHREN
MÉCANISME AMÉLIORÉ POUR PROCÉDURE D'ACCÈS ALÉATOIRE SÉCURISÉ

(30) Priority: 07.09.2021 EP 21195386; 07.10.2021 EP 21201499; 07.10.2021 EP 21201532
(43) Date of publication of application: 17.07.2024
(73) Proprietor: Koninklijke Philips N.V., 5656 AG Eindhoven (NL)
(72) Inventor: GARCIA MORCHON, Oscar, 5656 AG Eindhoven (NL); DEES, Walter, 5656 AG Eindhoven (NL)
(74) Representative: Philips Intellectual Property & Standards
(86) International application number: PCT/EP2022/074680
(87) International publication number: WO 2023/036754

(56) References cited:
- EP-B1- 3 488 657
- WO-A1-2021/048462
- WO-A1-2021/162628
- REZA SOOSAHABI: "SPARROW: A Novel Covert Communication Scheme Exploiting Broadcast Signals in LTE, 5G & Beyond", ARXIV.ORG, CORNELL UNIVERSITY LIBRARY, 201 OLIN LIBRARY CORNELL UNIVERSITY ITHACA, NY 14853, 27 August 2021 (2021-08-27), XP091039802
- HUAWEI ET AL: "Detection of MitM false base station", vol. SA WG3, no. e-meeting; 20200817 - 20200828, 7 August 2020 (2020-08-07), XP051916237, Retrieved from the Internet <URL:https://ftp.3gpp.org/tsg_sa/WG3_Security/TSGS3_100e/Docs/S3-201709.zip S3-201709_Detection of MiTM False Base Station.doc> [retrieved on 20200807]

## Description

### FIELD OF THE INVENTION

The invention relates to security technology for secure random-access procedures in wireless communication networks, such as - but not limited to - cellular communication networks.

### BACKGROUND OF THE INVENTION

Many wireless communication systems use access devices (such as base stations, Node Bs (eNBs, eNodeBs, gNBs, gNodeBs, ng-eNBs, etc.), access points or the like) to provide geographical service areas where wireless communication devices (e.g. end devices or terminal devices such as mobile stations or user equipment (UE)) communicate with an access device serving a particular geographical service area in which the terminal devices are located. The access devices are connected within a network allowing communication links to be made between the wireless communication devices and other devices.

In such telecommunication systems, the wireless communication devices can access different types of services including voice and data services through access devices that are deployed in field. The network access devices are connected to a core network (CN) - managed by a network operator - that controls the telecommunications systems and orchestrates the delivery of services. To this end, a UE first has to connect to an access device by means of the random-access procedure. In the Sparrow attack, the random-access (RACH) procedure is used by malicious UEs as a covert communication channel.

In the RACH procedure, in message 1 the UE sends its random-access preamble transmission; in message 2, the gNB sends its random-access response; in message 3, the UE sends its scheduled UL transmission; in message 4, the gNB replies with content resolution.

The attack assumes that a malicious sending UE, UE1, is allowed to include a random bit sequence x in message 3 to differentiate itself from other UEs contending the RACH access simultaneously. When the gNB replies with the content resolution message, the gNB has to include the bit sequence x received from malicious sending UE1 in message 4, so that another malicious receiving UE2 can receive it. This is feasible since the base station broadcasts message 4. In this way, malicious sending device UE1 can send a message to malicious receiving device UE2
Such telecommunication systems are also further evolving so that the wireless communication devices do not only have access to the CN via a real base station (RBS), but also via other access devices. For instance, a remote UE (i.e., a UE that cannot reach an RBS directly) uses a relay UE (i.e., a UE that is connected to the CN either via other UE or via the RBS) to connect to the CN. Similarly, other access devices might be a mobile base station such as a vehicle mounted base station or a satellite. In such a communication scenario, the Sparrow attack might have even bigger impact, e.g., in satellite based communications since a satellite can potentially cover a very large area. It is thus still desirable to augment available security features in wireless communication systems so that the risk caused by attacks to the random-access procedure can be further minimized. REZA SOOSAHABI: "SPARROW: A Novel Covert Communication Scheme Exploiting Broadcast Signals in LTE, 5G & Beyond" and WO2021/162628 are considered prior art**.**

### SUMMARY OF THE INVENTION

The invention is defined by the appended claims.

It is an object of the present invention to provide a more secure random-access procedure.

This object is achieved by a method as claimed in claim 1, claim 9, claim 17, claim 19, claim 23, by an apparatus as claimed in claim 7, claim 8, claim 18, claim 22, claim 27 by an attack detection system as claimed in claim 14, by a method as claimed in claim 15, by a computer program product as claimed in claim 29.

According to a first aspect of the invention, it is proposed a method of securely performing a random-access procedure between a User Equipment, UE, and an access device in a wireless network, wherein the method comprises:
receiving an L-bit sequence s received from the UE;
extracting a k-bit value V by masking s with a mask; and
sending V.

According to a variant of the first aspect of the invention, the number of bits L of the sequence s is less than k, the number of bits of the value V.

According to a second variant of the first aspect of the invention, the number of bits k of the value V is variable and configurable. Further, the number of bits k may depend on at least one of the number of UEs performing a random-access procedure, the network load, the desired security level, or a policy.

According to a second variant of the first aspect of the invention which can be combined with the previous variants, the mask used to mask the sequence s is determined depending on at least one of the number of UEs performing a random-access procedure, the network load, the desired security level, or a policy.

According to a third variant of the first aspect of the invention which can be combined with the previous variants, a seed used to determine the mask may be signalled along with V.

In accordance with a second aspect of the invention, it is proposed an apparatus for securely performing a random-access procedure wherein the apparatus comprises:
a receiver adapted to receive an L-bit bit sequence s; and
a microcontroller configured to extract a k-bit value V by masking s with a mask; and
a transmitter adapted to send V.

In accordance with a third aspect of the invention, it is proposed an apparatus for securely performing a random-access procedure wherein the apparatus comprises:
a receiver for receiving a k-bit sequence V'; and
a memory for storing an L-bit sequence s; and
a microcontroller adapted to determine a mask and extract a k-bit value V by masking the sequence s with the mask and configured to compare V with V'.

In accordance with a fourth aspect of the invention, which may be combined with the first aspect of the invention or used independently, it is proposed a method of securely performing a random-access procedure between a User Equipment, UE, and an access device in a wireless network, wherein the method comprises a modification in the beamforming of reference signals featured by at least one of:
the access device rearranging the order in which directional beams transmitting reference signals are broadcasted; and
the access device renaming the corresponding beam indexes used to identify them.

In a first variant of the fourth aspect, the modification is featured by a small random angle change in broadcast direction of the beams.

In a second variant of the fourth aspect which may be combined with the first variant, the method further comprises a modification featured by the adaptation of the transmission power in the beams, message 2, or message 4 of the random-access procedure based on at least one of: a configuration step, a reference signal received power, RSRP, of message 1 and/or message 3 in the random-access procedure, or a quality value reported by the user equipment in a Channel State Information, CSI. In this case, the method may further comprise deprioritizing a UE or signaling an alarm if a pattern of at least one of monitored RSRP measurements and CSI measurements deviates from a normal pattern.

In a third variant of the fourth aspect of the invention which may be combined with the previous variants, the method further comprises a modification featured by the disabling of a given beam when the access device detects that a given beam is used too frequently.
In a fourth variant of the fourth aspect of the invention which may be combined with the previous variants, the method may comprise:
monitoring whether any UE is attempting the random-access procedure; and
performing the modification when no UE or a maximum number M of UEs are performing random-access procedure.

In a fifth variant of the fourth aspect which may be combined with the previous variants, the method further comprises at least one of:
a regular or periodic modification; and
an on-demand modification.
In a sixth variant of the fourth aspect which may be combined with the previous variants, the method further comprises coordinating multiple access devices when a modification is executed by at least one of:
receiving a modification schedule from a managing entity; or
mutually monitoring modifications in adjacent access devices; or
receiving a modification execution or announcement over a communication interface.

In accordance with a fifth aspect of the invention, it is proposed a method for adjusting the random-access process triggered by a modification of an access device comprising at least one of:
a UE resending message 1 of the random-access procedure using a new preferred beam; or
a UE reporting its new preferred beam; or
an access device using the beam covering the UE best based on the modification.

In accordance with a sixth aspect of the invention, it is proposed an apparatus for securely performing a random-access procedure wherein the apparatus comprises:
a transmitter capable of beamforming
a control unit for controlling the beamforming of the transmitter,
   wherein the apparatus is arranged to introduce a modification in the beamforming of reference signals featured by at least one of
rearranging the order in which directional beams transmitting reference signals are broadcasted; and
renaming the corresponding beam indexes used to identify them.

In accordance with a seventh aspect of the invention which can be combined with the first or the fourth aspect of the invention or used independently, it is proposed a method of securely performing a random-access procedure between a User Equipment, UE, and an access device in a wireless network, wherein the method comprises:
determining or receiving a cryptographic key K linked to the access device and the UE;
determining or receiving a L-bit sequence s; and
encrypting s with K into V; and
sending V.

In a first variant of the seventh aspect, the method further comprises determining the cryptographic key K that depends on the physical channel characteristics between user device and access device. Alternatively, the method further may comprise receiving a public key associated to the access device.

In accordance with an eighth aspect of the invention, it is proposed an apparatus for securely performing a random-access procedure wherein the apparatus comprises a transceiver and a control unit, the apparatus arranged to
determine or receive a cryptographic key linked to the access device and the UE;
determine or receive an L-bit sequence s; and
encrypt s with K into V; and
send V.

In accordance with a ninth aspect of the invention which can be combined with the first aspect, or the fourth aspect of the seventh aspect of the invention, it is proposed a method of securely performing a random-access procedure between a User Equipment, UE, and an access device in a wireless network, wherein the method comprises:
monitoring whether a UE performing the random-access procedure is within the communication range of the cell; and
limiting access to UEs performing the random-access procedure from outside the communication range of the cell.

In a first variant of the ninth aspect, the monitoring is done based on the timing advance parameter.

In a second variant of the ninth aspect which may be combined with the first variant, the method further comprises at least one of:
configuring an access device with a maximum allowed timing advance value; or
computing the required timing advance values for a PRACH message; or
limiting access to a PRACH message requiring a timing advance value higher than the maximum allowed timing advance; or
reporting an alarm if a PRACH message requires a timing advance value higher than the maximum allowed timing advance.

In a third variant of the ninth aspect of the invention, which can be combined with the first or the second variants, the method further comprises monitoring the assigned TA values in the RAR (Random Access Response) messages.

In accordance with a tenth aspect of the invention, it is proposed an apparatus for securely performing a random-access procedure wherein the apparatus comprises:
monitoring whether a UE performing the random-access procedure is within the communication range of the cell; and
limiting access to UEs preforming the random-access procedure from outside the communication range of the cell.
In accordance with an eleventh aspect of the invention, it is proposed a network device for a wireless network, comprising an apparatus according to one or more of the previous aspects.

It is noted that the above apparatuses may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the apparatus , the network device, the methods detailed above may have similar and/or identical preferred embodiments, in particular, as defined in the dependent claims.

It shall further be understood that the apparatus, the network device, , the methods could refer or be executed on a single or multiple distributed network devices.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows schematically and exemplarily a communication network;
Fig. 2 depicts a message flow of a random-access procedure; and
Fig. 3 depicts the radiation pattern of a primary station implementing various techniques related to an embodiment of the invention.

### DETAILED DESCRIPTION OF EMBODIMENTS

Embodiments of the present invention are now described based on a radio resource control (RRC) signaling, and in particular, a random access procedure, for 5G cellular networks.

Throughout the present disclosure, the abbreviation "gNB" (5G terminology) is intended to mean access device such as a cellular base station or a WiFi access point. The gNB may consist of a centralized control plane unit (gNB-CU-CP), multiple centralized user plane units (gNB-CU-UPs) and/or multiple distributed units (gNB-DUs). The gNB is part of the radio access network (RAN), which provides an interface to functions in the core network (CN). The RAN is part of a wireless communication network. It implements a radio access technology (RAT). Conceptually, it resides between a communication device such as a mobile phone, a computer, or any remotely controlled machine and provides connection with its CN. The CN is the communication network's core part, which offers numerous services to customers who are interconnected via the RAN. More specifically, it directs communication streams over the communication network and possibly other networks.

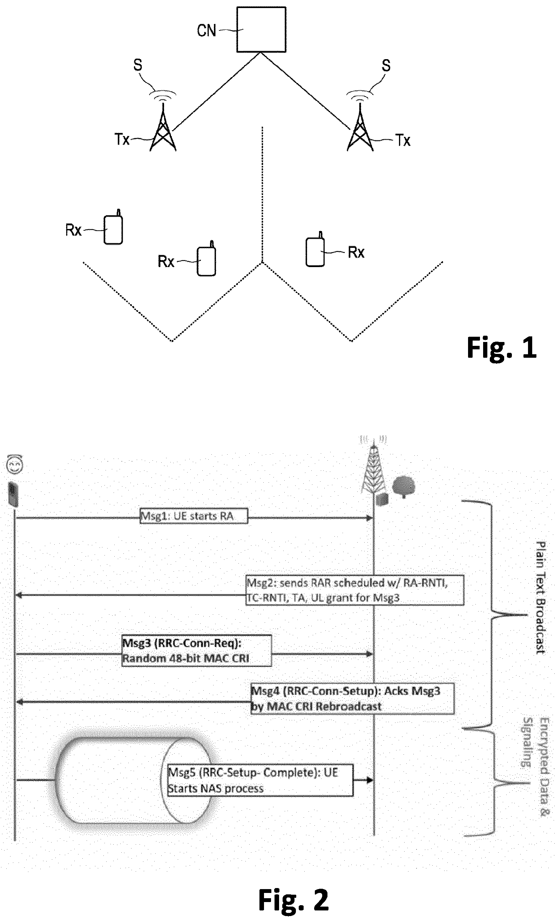

Fig. 1 shows schematically and exemplarily a communication network in which the embodiments disclosed herein can be implemented. The shown exemplarily network is a cellular telecommunication network, as for example a 4G or a 5G network, whose terminals/end devices (referred to in 5G as User Equipment, or UE in short) and access devices (gNB), realize apparatuses according to the embodiments disclosed. In Fig. 1, the terminals/end devices are indicated as receivers Rx but it is understood that they also act as transmitters in the network. Likewise, the access devices (gNB) are indicated as transmitters Tx in Fig. 1 but it is understood that they also act as receivers in the network. For instance, the terminals/end devices can access different types of services including voice and data services through an exchange of signals with the base stations of the network.

Each base station serves and communicates with the terminals/end devices present in a predetermined area, also referred to as a cell. Two adjacent cells are indicated in Fig. 1 by dotted lines. The base stations are connected to a core network CN, which is managed by a network operator, or managing entity, and controls the delivery of services. Each cell is served by one base station, which functions as an interface between the terminals/end devices and the core network (CN). When, as indicated by Fig. 1, the plurality of terminals/end devices are mobile devices that may travel from one network cell to another, therefore, the interface used by a given terminal/end device may change over time.

The terminals/end devices may communicate with the base stations on various radio channels, uplink (from the devices to the respective base station) and downlink (from the respective base station to the devices). Other radio channels may exist, for example, among the terminals/end devices (for example, Sidelink channels) and among base stations (e.g. X2 interface), but are not shown in Fig. 1 for the sake of simplicity. Each of the terminals/end devices could carry out its functions along any of its channels.

The access devices might be stationary devices such as a base station installed on a building, or mobile devices such as a vehicle mounted base station or a UAV or a satellite offering cellular connectivity.

An element for implementing scheduling mechanisms is the Radio Resource Control (RRC) protocol which can operate end-to-end to wireless communication devices ("UEs" in 5G terminology).

Another element for implementing scheduling mechanisms may be control elements (CEs) of the Media Access Control (MAC) protocol, which are short elements (or information elements (IEs)) inserted between existing uplink (UL), downlink (DL) or sidelink (SL) transmissions over the MAC layer, used to efficiently signal certain events, measurements or configurations. Further MAC CEs may be used by the access device (e.g. gNB) to control the behaviour of the communication device (e.g. UE) when executing various other 3GPP mechanisms such as Channel State Information (CSI) reporting, Sounding Reference Signals (SRS), or Discontinuous Reception (DRX).

A further element may be the use of a downlink control information (DCI), which is a short message sent in a low-bitrate control channel (e.g. Physical Downlink Control Channel (PDCCH)) with a special blindly detectable modulation or coding. This mechanism is implemented at the physical protocol layer (PHY L1) and does not need to use the MAC PDU header structure. Here, various DCI formats can be defined with different information content. Communication resources for dynamic scheduling can be indicated in the DCI.

3GPP specification TS 33.501 discloses how the network can use information sent in measurement reports in RRC_CONNECTED mode to perform UE-assisted network-based detection of a false or fake base station (FBS). Moreover, the initially mentioned 3GPP specification TR 33.809 discloses study results of the FBS issue and discusses different solutions to avoid/detect FBS and MitM attackers.

*In the* Sparrow attack with reference to SPARROW: A Novel Covert Communication Scheme Exploiting Broadcast Signals in LTE, 5G & Beyond available online at https://arxiv.org/pdf/2108.12161.pdf (in the following [1])*, and 3GPP Tdoc S3-212783 (in the following [2]), 3GPP Tdoc S3-212452 (in the following [3]), the random-access (RACH) procedure is used by malicious UEs as a covert communication channel. In the RACH procedure, in message 1 the UE sends its random-access preamble transmission; in message 2, the gNB sends its random-access response; in message 3, the UE sends its scheduled UL transmission; in message 4, the gNB replies with content resolution. The attack assumes that a malicious sending UE, UE1, is allowed to include a random bit sequence x in message 3 to differentiate itself from other UEs contending the RACH access simultaneously. When the gNB replies with the content resolution message, the gNB has to include the bit sequence x received from malicious sending UE1 in message 4, so that another malicious receiving UE2 can receive it. This is feasible since the base station broadcasts message 4. In this way, malicious sending device UE1 can send a message to malicious receiving device UE2. It is to be noted that [1] remarks that messages 2 and 4 are sent in basic transmission mode (e.g., broadcast SRBs). It is to be noted that message 2 is addressed to the UE using the RA-RNTI that is derived from the transmission slot chosen by the UE to transmit message 1. In message 2, the gNB assigns to the UE a TC-RNTI (16 bits long). The bit sequence x is denoted a Contention Resolution Identity (CRI) that is 48 bits long and includes a 40-bits long randomly chosen value.*

*In [1] and [2], it is described that a way of dealing with the Sparrow attack is by taking the bit sequence x received from a UE, and computing a function H(), e.g., H() might be a cryptographic hash function, on x concatenated with a random value salt s, i.e., H(x*|*s) where* / *means concatenation. The gNB then sends H(x*|*s) (or some bits of H(x*|*s), e.g., the least significant bits or some bits at random to UE) together with the salt s in message 4. Here the salt acts as a hint to the UE about how to check that message 4 is actually intended for it since the UE has to check that the computation of its value x sent in message 3 concatenated with the received salt s equals the received H(x*|*s*)*. A problem in this approach in 53-212783 is that sending s requires additional bandwidth and its length also plays a role in the probability of collisions.*

To address this bandwidth problem, one possible solution is for the gNB to compute a salt s that is used to determine the communication resources (e.g., time slot, SFN, frequency) used to send, e.g., message 4 so that the salt s is implicitly sent in message 4. The salt might also be some of the other communication parameters used in the RACH procedure, e.g., a (randomized) resource allocation of message 2 or one of the RNTls, e.g,. the RNTI used to identify message 4. When a UE receives message 4, it determines the value of s from, e.g., the communication resources that were used to transmit message 4 or the RNTI. Once the UE has obtained s, the UE can verify that the message was addressed to it by checking that the hash of its bit string x concatenated with the received s equals the received H(x|s) value in message 4. This approach for distributing the salt reduces the communication overhead.

*In [1] and [2] it is also described that the output of H(x*|*s) might be truncated (e.g., only the k least significant bits are sent) or only some bits might be sent (K-erasures) or some errors might be introduced (K-errors). For instance, in the case of K-erasures it is required to signal the bits that are removed. This can be done by means of a mask that is as long as H(x*|*s), e.g., L bits long. Then the remaining L-k bits need to be transmitted. The transmission of, e.g., such a mask in K-erasures also requires additional bandwidth, namely L bits.*

This can be addressed if the mask is derived from some randomly generated parameters that are inherently exchanged in message 4 or previous messages, e.g., an RNTI or the allocated transmission resources. To generate the bit string in the form of a mask from a random value that is smaller we can apply a certain function, e.g., a pseudo random function, e.g., based on a hash function such as SHA-256, and compute the mask by generating a L-bit bitstring of fixed weight K. Since the weight is fixed, it can be specified in a technical specification and does not need to be exchanged. A way to compute such a bit string is to generate indexes between 0 and L-1 at random till K different indexes are generated. The mask then is the L-bit bitstring with 1s in the positions of the generated indexes. Another approach is to set a bit string with K 1s and L-K 0s and applying a random permutation. This can be done if L long values (e.g., 128 bit long) are generated at random (e.g., applying a pseudorandom function on a seed), and the least significant bit of the first K values is set to 1 and the least significant of the last L-K values is set to 0. In a next step, the L random looking values are sorted. The mask is constructed by concatenating the least significant bit of the L sorted values. Another option is to generate an L-bit long candidate mast at random, e.g., from a seed, count the numbers of 1s, and accept it if the number of 1s is more than a minimum threshold (th_min) and is less or equal than a maximum threshold (th_max). The operation is repeated if the candidate mask does not fulfil the required weight. If th_max - th_min > 1, then the value of k, needs to be exchanged, or alternatively, e.g., how many additionals 1s the mask contains compared with th_min.

*We note the underlying approach that is proposed in [1] or [3] might not fully solved the Sparrow attack since the sending malicious UE1 controls*/*determines the bit string x to be sent, and the receiving malicious UE2 can still find it back using a dictionary. For instance, assume that the malicious sending device UE1 can send either x0=000...000 or x1=1111...111 and UE2 knows these two values. Let's assume that the gNB sends the L-K least significant bits of Hash(x*|*s) for a known s. When the malicious receiving UE, UE2, receives this value, UE2 takes x0 and x1 and obtains Hash(x0*/*s) and Hash(x1*/*s). UE2 then truncates the outputs and only considers the L-K least significant bits. If one of the values matches, then UE2 understands that UE1 has sent him a message.*

In another related embodiment to address the Sparrow attack, the gNB encrypts or scramble the received bit string x using as key a function (e.g., hash) of, e.g., the bitstring and a salt. When the UE receives the result in message 4, it can verify if the message is for him by decrypting (or descrambling) the received value using the same key derived from its transmitted value x and the salt. If malicious devices UE1 and UE2 want to use this approach for communicating, UE2 will need to decrypt (or descrambling) the received value with all possible keys derived from all possible messages xi and salt s.

In above embodiments, we note that is advantageous to make the length of the salt as long as possible since this increases the effort of the malicious receiver and prevents the precomputation of a dictionary. The problem is that sending a long salt might not be feasible since the current standard limits the size of the CRI to 48 bits. Thus, it is advantageous to send this salt, or part of it, in an implicit manner to make the attack as complex as possible. An alternative, if both UE and gNB have access to a common value, e.g., a counter derived from the UTC time, it is also possible to use such a counter as (part of the) salt. The least significant bits of the UTC time can be exchanged to solve a potential loose time synchronization.

In [1] it is stated that the total size of the message is 2L+S-K where L refers to the length of H(x|s), S refers to the length of the salt, and K is the number of bits that are not transmitted . The presented embodiments describe how the message size can be reduced to L-K since the S bits of the salt can be sent implicitly and the L-bit long mask used to select the K bits that are removed can also be transmitted in an implicit manner: the mask is generated by means of a pseudorandom function from a seed that is implicitly sent.

In another embodiment modified from the previous embodiments, and in accordance with a solution proposed in this application, the gNB - upon reception of the received CRI field, x bit long, in message 3 - may send a subset of the bits (<x) in message 4. The subset of bits might be chosen according to a mask. This embodiment is therefore as the previous embodiment described above, but does not require applying a hash function to the received CRI. Although this may make the communication with the malicious receiving UE easier since e.g., a repetition code might allow withstanding this countermeasure, this countermeasure reduces the CPU needs and increases the difficulty of carrying out the attack by decreasing the amount of data that can be transferred. Thus, it is proposed a method of securely performing a random-access procedure between a UE and an access device in a wireless network, wherein the method comprises:
Receiving an L-bit bit sequence s received from a UE; and
determine a mask; and
extracting a k-bit value V by masking s with the mask; and
sending V.

In the above embodiments, the number of bits sent in message 4 might be context dependent. For instance, if the gNB notices that almost no UEs are currently performing RACH, then the gNB can reply with very few bits of the received CRI; if the gNB notices that a high number of UEs are performing RACH, then the gNB might use a higher number of bits in its message 4 reply. For instance, if the CRI is x bits long, e.g., x is 40 bits, then the reply in message 4 might include an x-bit field as follows (such that x= x1+x2+x3):
- x1 bits (e.g., x1 = 2) can be used to indicate an identifier indicating the length of the mask or how many bits of the CRI are sent back. For instance: 00 might indicate 5 bits, 01 might indicate 10 bits, 10 might indicate 20 bits, and 11 might indicate 38 bits.
- x2 bits are used to encode a seed used to compute the mask used to choose the selected bits. As indicated in previous embodiments, this seed might also be implicitly sent, e.g., in the allocated resources used for the transmission of message 4. In above example, if the seed is sent explicitly, then the value might be 33, 28, 18 bits long. This field is not present if the seed is not explicitly sent.
- x3 bits are used to encode the transmitted bits. In above example, this can be 5, 10, 20 or 38 bits long. Thus, x3=k in the above definition.
Note that an additional bit (or a different field) might be required to indicate whether the seed is sent implicitly or not. If the number of replied bits is smaller than x, the gNB might also send a shorter message making the system more efficient.

In another related embodiment to address the Sparrow attack, the gNB can use a very focused beamforming when sending message 4. This reduces the risk that another UE receives it.

Here, it is required to consider that UE indicates the gNB which beam the UE prefers after scanning the SSBs broadcasted by a gNB. The UE can indicate which beam the UE prefers by selecting a specific preamble used in message 1. In this way, the gNB knows which of its beams used to broadcast the SSBs is the one received best by the UE. It is to be noted that a malicious sending UE knowing the radiation pattern of a gNB might still go around focused beamforming if the gNB uses static beams/SSBs, i.e., if a beam is used to broadcast a given SSB always in the same geographical area. If the gNB uses static beams/SSBs and the malicious sending UE knows which beam is used by the gNB to cover the area where the malicious receiving UE is located, the malicious sending UE might select a preamble linked to the beam/SSB covering the area where the malicious receiving UE is located, and use it in the first message of the RACH procedure so that the gNB replies with message 2 or 4 using that beam. To avoid this situation, next to using very focused beamforming, the gNB might use additional techniques to make the sparrow attack more complex.

A first technique consists in the gNB rearranging the order in which beams are broadcasted and renaming the corresponding SSB indexes used to identify them. Such a rearrangement and renaming might be done in a regular basis, e.g., every T seconds, or every time the system frame number (SFN) wraps around, or on demand, e.g., when a gNB detects that a given beam/SSB is being used more than usual (giving an indication of a potential ongoing Sparrow attack). This rearranging might be done as defined in a policy that might be configurable by a managing entity (e.g., a network function in a core network). This rearranging might be configurable by the network operator.

An example of the rearrangement/renaming is as follows: at time t0, a gNB uses 4 beams/SSBs transmitted sequentially and pointing towards, e.g., north, east, south, west and identified with SSB0, SSB1, SSB2, and SSB3; at time t1, the gNB uses 4 beams/SSBs transmitted sequentially and pointing towards east, west, north, and south and identified with SSB0, SSB1, SSB2, and SSB3. Every time the arrangement and naming of beams/SSBs change, the malicious sending UE does not know exactly which beam/index is used to cover a given area making the operation of the Sparrow attack more difficult. A similar example might be feasible in a satellite based access device. In this case, different beams (SSBs) might point towards different areas in an area. For instance, different regions in a country. The naming of the beams might change in a regular basis.

A second related technique consists in -- next to rearranging/renaming - also slightly changing the direction of each of the beams, while the base station is still capable of covering the whole area. This is useful because if the direction remains fixed, even if the arrangement/naming of the beams changes, a malicious sending UE might be able to reidentify the beams by their power signature. If the direction or transmission power are slightly modified every time, the malicious sending UE will have more difficulties to reidentify the beams, i.e., to know which area is covered by which beam in the RACH procedure.

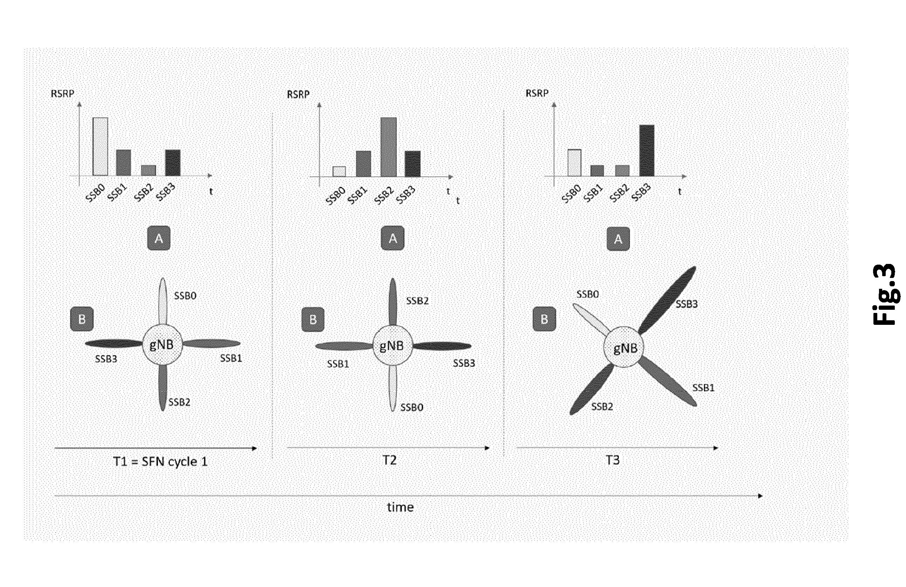

A third related technique is that the gNB adapts the transmission power in the SSBs as well message 2 and/or 4 based on, e.g., a pre-configuration step (e.g., during deployment) and/or the Reference Signal Received Power (RSRP) of message 1 (or 3) and/or CSI with the UE performing the RACH procedure. The gNB adapts its transmission power so that it does not reach UEs that are much further away of the UE performing the RACH procedure. Note that a malicious sending UE might try to manipulate the transmission power of the gNB by, e.g., modifying measurements towards the gNB or transmitting message 1 (or 3) with low power so that the gNB estimates its position as being very far away forcing the gNB to transmit with high power. However,
the gNB can monitor the RSRP/CSI measurements of UEs performing RACH and use these measurements to determine a communication patter in which multiple UEs try to join with, e.g., a low RSRP, requiring a high transmission power of messages 2 and 4. If such a pattern is detected that deviates from the normal historical pattern of that gNB for the RACH procedure, the gNB might de-prioritize those UEs or signal an alarm. Fig. 3 depicts the radiation pattern of a gNB implementing the first, second, and third techniques when transmitting the beams/SSBs. We observe - for three intervals of time T1, T2, and T3 - in which direction and with which power the base station transmits its 4 SSBs (SSB0,...,SSB3). These SSBs are depicted by means of the ellipses around the gNB. The direction of the ellipse indicates the direction of the transmitted beam/SSB and the length of the ellipse indicates the transmission power. We observe that the gNB transmits the SSBs/beams in a different timing order and/or in a different direction and/or with slightly different transmission power.

Fig. 2 depicts two UEs, A and B. UE A might be the malicious sending UE and UE B might be the malicious receiving UE. On the top of Fig. 2 it is shown the measured RSRP of each of gNB's beams/SSBs by UE A for each interval of time T1, T2, and T3. We observe that in T1, T2, and T3 UE A observes as the strongest beam/SSB: SSB0, SSB2, and SSB3, respectively. Those are the beams/SSBs that UE A should use to perform RACH if the selection is perform based on the measured signal power. In contrast, if UE A wants to perform a sparrow attack with UE B, UE A should use beams/SSB: SSB3, SSB1, and SSB0. Since the configuration keeps changing, it is difficult for UE A to use the proper beam/SSB in a reliable manner, and as a consequence, UE A cannot communicate in a reliable manner with UE B by means of the Sparrow attack.

A fourth related technique is to disable a given beam when the gNB detects that a given beam is used too frequently having that area being served by a different base station or a different DU of a base station.

In above embodiment and techniques, the gNB/5G system should adapt the timing to (1) rearrange the SSBs/beams and/or (2) change the direction of beams and/or (3) vary the transmission power and/or (4) serve an area by a different gNB in such a way that the communication disruption during RACH is minimized. The gNB can achieve this by (1) monitoring whether any UE is attempting RACH and (2) only performing the above modifications when no UE or a maximum number M of UEs are currently performing RACH. The gNB might also choose to finish the ongoing RACH attempts based on the previous SSB/beam configuration. Moreover, the gNBs should coordinate themselves when adapting the radiation pattern. This can be done by (1) having the core network distribute transmission schedule to the gNBs under its control; (2) the gNBs measuring the received signals (beams/SSBs) from surrounding cells and using it to adapt the transmission parameters (direction or transmission power); (3) the gNBs informing over the Xn interface about their corresponding transmission pattern. Furthermore, if a UE notices that the RSRP measured from a gNB suddenly change when it is performing the RACH procedure, the following actions might be performed:
* if the change is measured after sending message 1, the UE might resend message 1 using the newly selected beam/SSB with the highest received RSRP.
* if the change is measured after sending message 1 or 3, the UE might report its new preferred beam.
* if the change is measured after sending message 1 (or 3), the UE might attempt to receive message 2 (or 4) through the previous beam until it has informed the gNB about its new preference.
* if the change is measured after sending message 1 or 3, the gNB might also choose to reply using the beam that is expected to cover the UE best. The UE might also then expect to receive the reply through one of the beams with best RSRP.

Although the above actions are feasible, the UE or gNB should perform such actions only if required or allowed according to a policy. The reason is that this might be misused by a malicious sending UE to learn which beam is used to cover the area where the malicious receiving UE is present.

In an additional embodiment, the gNB sends the received CRI value, or a subset of it, encrypted back to the UE. This makes it harder for the malicious receiving UE to understand the transmitted value. The challenge when using such an "encryption-based" solution consists in determining a method to establish a key between UE and gNB without letting a malicious receiving UE guess it. A solution to this challenge is to use a "key" that depends on the physical channel characteristics, e.g., the phase of the subcarriers used in the communication, between UE and gNB and can only be known to both devices. For instance, the gNB might transmit some physical information in randomized way so that it is specific to the area where the receiving UE is located. For instance, such physical information might be related to the beams/SSBs that the gNB is using to cover a given area when transmitting the MIB/SIB1. When a UE measures the received power of the SSBs/beams, the UE will choose a suitable preamble (for the SSB/beam that it has received with the best RSRP) and send it to the gNB. This gives an indication to the gNB about which is the best received beam, but also about which other beams are probably well received by the UE, even if with a lower RSRP. Note that this information is not exchanged over the air so that it is more difficult for a malicious receiving UE to obtain in. This shared physical information can form the basis of a cryptographic key that can be used to encrypt the CRI value (or a hash of the CRI value or a subset of the bits of the (hash of the) CRI value) in message 4. For instance, if the gNB uses 64 SSBs/beams, the UE and gNB might use as the cryptographic key the indexes of the k best received SSBs/beams except the best received one. For instance, k might be 2. The encryption might be done, e.g., by creating a pseudorandom sequence by applying a hash function, or a key derivation function on the SSB indexes and XORing the transmitted data with the least significant bits of the generated pseudorandom sequence. Note that instead of encryption, this physical information might also be used as SALT s in above embodiments, in particular, when computing H(x|s). Note also that the UE might indicate to the gNB in message 3 the measured physical channel characteristics, e.g., the RSRP levels of different beams/SSBs. The gNB can verify that the levels are as they should be and use that information in its answer in message 4, e.g., to encrypt the answer.

Another encryption approach could consist in the gNB making available a public key that can be used for encryption. This could be done if the gNB sends in a SIB its encryption public key. The gNB or the CN could sign this encryption public key that could be verified by the UE if the UE has the corresponding trust anchor, e.g., a certificate including the public key that was used to create the digital signature. This trust anchor might have been preconfigured. Once the UE has received or retrievedthis encryption public-key, the UE can use it to encrypt the fields that require protection, e.g., the CRI. To retrieve the public-key, the UE might first read/receive the MIB, then read/receive the SIB1, and then use information in SIB1 to determine whether this public-key is available in a different SIB. If available, then the UE can read/receive it.

In a related embodiment variant, to avoid that an attacker can modify the ciphertext at its will, the UE/access device should use an encryption scheme that is secure against Choosen Ciphertext Attacks, e.g., it might use a CCA-secure KEM scheme relying on an FO transform or an encryption scheme combining a CCA-secure KEM scheme and a symmetric encryption scheme such as GCM. In such a scheme, if m is the message to transfer from UE to gNB, the UE creates a ciphertext that contains a public-key component generated by the UE and that depends on the message m itself. When the gNB receives the message, the gNB would decrypt the CT itself obtaining message m'. Once the gNB obtains m', the gNB checks whether the public-key component generated from m' equals the one that was received. In this way the gNB can know whether the message has been modified. If m is very short, it is better to encapsulate a random symmetric key with a CCA-secure KEM and then use that key to encrypt m with a symmetric encryption algorithm.

In above embodiments, it is required to consider backwards compatibility between legacy UEs and new gNBs and between new UEs and legacy base stations. An option, is that new gNBs broadcast their capability as part of the system information, e.g., indicating a bit it SIB1. The gNB might also signal this information in messages 2 or 4, e.g., by setting a specific bit to a predefined value. Another option is that new UEs can signal how the bit string in message is to be computed, e.g., by just retransmitting the bit string in message 3 or by including a specific transformation on this value as described above. A UE can signal this fact by setting a bit in messages 1 or 3 at a specific value. A new gNB will use that to determine how the bit string in the replay message 4 is to be computed. If a new UE observed that the gNB is a legacy base station by observing that, e.g., the SIB1 does not state that it is a new gNB supporting this feature, the new UE will know that it has to just check the received bit string in message 4 with the bit string that it sent in message 3. If the new UE got an indication that the gNB is a new base station supporting an enhanced prevention of the Sparrow attack, the UE will check the value of the incoming bit string in message 4, e.g., as indicated in one of the embodiments above.

In the Sparrow attack [1][2][3], the random-access (RACH) procedure is used by malicious UEs as a covert communication channel. In the RACH procedure, in message 1 the UE sends its random-access preamble transmission; in message 2, the gNB sends its random-access response; in message 3, the UE sends its scheduled UL transmission; in message 4, the gNB replies with content resolution. This RACH procedure is shown in Fig. 2. The attack assumes that a malicious sending UE, UE1, is allowed to include a random bit sequence x in message 3 to differentiate itself from other UEs contending the RACH access simultaneously. When the gNB replies with the content resolution message, the gNB has to include the bit sequence x received from malicious sending UE1 in message 4, so that another malicious receiving UE2 can receive it. This is feasible since the base station broadcasts message 4. In this way, malicious sending device UE1 can send a message to malicious receiving device UE2.

It is to be noted that messages 2 and 4 are sent in basic transmission mode (e.g., broadcast SRBs). It is to be noted that message 2 is addressed to the UE using the RA-RNTI that is derived from the transmission slot chosen by the UE to transmit message 1. In message 2, the gNB assigns to the UE a TC-RNTI (16 bits long). The bit sequence x is denoted as Contention Resolution Identity (CRI) that is 48 bits long and includes a 40-bits long randomly chosen value.

A way of dealing with the Sparrow attack is by taking the bit sequence x received from a UE, and computing a function H(), e.g., H() might be a cryptographic hash function, on x concatenated with a random value salt s, i.e., H(x|s) where | means concatenation. The gNB then sends H(x|s) (or some bits of H(x|s), e.g., the least significant bits or some bits at random to UE) together with the salt s in message 4. Here the salt acts as a hint to the UE about how to check that message 4 is actually intended for it since the UE has to check that the computation of its value x sent in message 3 concatenated with the received salt s equals the received H(x|s).

The output of H(x|s) might be truncated (e.g., only the k least significant bits are sent) or only some bits might be sent (K-erasures) or some errors might be introduced (K-errors). For instance, in the case of K-erasures it is required to signal the bits that are removed. This can be done by means of a mask that is as long as H(x|s), e.g., L bits long.

A first problem in above solutions is that sending the salt s and/or a mask requires additional bandwidth and its length also plays a role in the probability of collisions. In particular, a solution detailed in [1] requires sending 2L+S-K where L refers to the length of H(x|s) as well as the length of the mask, S refers to the length of the salt, and K < L is the number of bits that are not transmitted from H(x|s). However, for a drop-in solution only 40 bits are available (corresponding to the length of the CRI).

A second problem in above solutions is that they describe a solution to a specific covert communication attack during the RACH procedure, while there are additional covert communication channel attacks that have not been described yet, and thus, have not been solved yet. For instance, it will be described that malicious sending and receiving UEs can make use of the Timing Advance Command and RA-RNTI fields to communicate in a cover manner using only the first two messages of the RACH procedure. This covert communication attack is denoted TA-based covert communication attack.

In accordance with a current definition of this aspect of this invention, it comprises at least one of the following two features.

A first feature of this aspect of the invention consists in describing how to transmit those elements (salt and mask) that are required in some solutions (e.g., in [1][2]) in an implicit manner so that they do not cost any additional bandwidth. This allows reducing reduce the bandwidth needs in [1][2] from 2L + S - K to L - K bits.

A second feature of this aspect of the invention consists in describing solutions addressing the TA-based covert communication attack.

In [1], a covert communication attack is described based on the manipulation of the Contention Resolution Identity in the third message of the RACH procedure. A similar covert communication attack can be achieved by manipulating the transmission time of the first message of the RACH procedure: if a UE transmits a bit earlier or later, the gNB will assign a different Timing Advance value (that is encoded in 12 bits) that will be broadcasted in message 2 of the RACH procedure (RAR). A malicious transmitting UE can do this as follows. In Step 1: the malicious transmitting UE sends a PRACH request (1^{st} message in the RACH procedure) and learns from the gNB response (RAR, 2^{nd} message in the RACH procedure) the assigned timing advanced (TA) value. The malicious transmitting UE can perform this action a single time or multiple times to get a good estimate of the TA value that the gNB assigns to it. In Step 2: once the malicious transmitting UE has learned the TA value that the gNB assigns to it, it is possible for the malicious transmitting UE to modify the transmission timing of the PRACH message so that the gNB assigns to it an arbitrary TA value of its choice. With this capability, we can assume that the malicious transmitting UE and the malicious receiving UE have agreed on the following exemplary protocol for transmitting data through this covert channel: Step 1) The transmitting UE forces the gNB to assign a TA value equal to the maximum value, or close to it, for a number of N requests, e.g., N=1, in a given period of time, e.g., 1 minute. For instance, if the TA value can be 12 bits long, the transmitting UE forces the gNB to assign a TA value equal or higher than 1111 1111 0000, in binary. Step 2, once the transmitting UE manages that the gNB replies with a TA that equals the maximum value, or close to it, the transmitting UE sends a PRACH with such a timing that the gNB will reply with a TA value such that: the most significant bit(s) indicates a long distance, and the less significant bits indicate the data that the transmitting UE wants to send to the receiving UE. For instance, a potential TA value transmitted in the TA command field might be:
11 AAAA AAAA YY
Where the 2 most significant bits are set to 1 indicating the UE is far from the gNB, the bits indicated with A are used to transmit a message, and the bits set to Y are ignored since those might be caused by potential time inaccuracies at the gNB when receiving the PRACH. In this example, a transmitting UE requires two PRACH messages to force the gNB to broadcast a byte (AAAA AAAA) of useful data within the TA command field of the RAR message that can be understood by the receiving UE.

The above TA-based covert communication channel can be further enhanced, for instance, if the malicious transmitting UE and the malicious receiving UE agree on the usage of certain RA-RNTI. If this is the case, the reliability and capacity of above channel increases since if a receiving UE observes a RAR message addressed to a specific RA-RNTI with a very high TA value, then the receiving UE can determine the origin of the message in a more reliable manner. A solution to the TA-based covert communication channel might need to be different than the solutions in presented in above embodiments. The main reason is that the Contention Resolution Identity can be chosen at random, but the TA value is inherently related to the communication channel between UE and gNB ensuring that the uplink frames are well aligned with the downlink frames.

It is to be noted that performing the random-access procedure with an access device that is a placed in a satellite, that is, a non-terrestrial network, might require parameter and field sizes that might be different than in terrestrial networks. For instance, the timing advance value might require a longer field size, e.g., more than 12 bits, due to the higher distance between the terminal device (UE) and the access device. This might facilitate the usage of such fields to enable covert communication channels.

A first embodiment to address this TA-based covert communication channel requires the gNB to monitor whether UEs performing RACH are within its expected communication range of the cell. If a cell has been deployed to cover an area of up to 2 km around its location, then requests coming from UEs located outside of the coverage area (and corresponding to high TA values) should be excluded, or at least limited. This can be done by 1) configuring the gNB with the maximum allowed TA value (TA threshold) e.g., this can be done during deployment or during operation, e.g., from the core network or from a network management centre. During operation, 2) the gNB will compute the required TA values for incoming PRACH messages and exclude, i.e., not answer, those requiring a TA value higher than the TA threshold. When this happens, 3) the gNB might also report an alarm towards a management function, e.g., a function performing analysis of potential security events. As an extension, a gNB might also accept a TA value higher than the TA threshold if it happens sporadically, but it should exclude them if a multiple of such TA values are detected in a burst.

A second embodiment to address this TA-based covert communication channel might analyze patterns in the assigned TA values in the RAR messages (and/or related communication parameters such as the used RA-RNTI) and compare them with the expected ones. To this end, a gNB might keep a historical data record of the distribution of TA values (and/or RA-RNTIs) over time. This can include, e.g., the distribution of the TA values (average value, median value, maximum value, minimum value, etc) as a function of the daytime, week day, month. This historical data record can be kept at the gNB or might be fed to, e.g., a data analytics function (DAF) in the core network. The gNB or the DAF can analyze the computed TA values for the incoming PRACH messages by, e.g., clustering them and identify a cluster that falls outside of the normal values. This detection can be based on, e.g., principal component analysis or performing a Chi-square test to check whether the distribution of, e.g., historical TA values and new TA values follow the same distribution.

A third embodiment to address this TA-based covert channel, the base station can compute the TA value (TA_real) corresponding to a received PRACH message and add to that value a random variable R so that the TA value sent to UE in the second message of the RACH procedure is: TA_real + R. For instance, if the TA value is 12 bits long and the R value is 6 bits long (e.g., values between -32 and 31), then this will reduce the number of useful bits that can be used to transmit data from the transmitting UE to the receiving UE. The initial inaccuracy introduced by adding R is removed in later protocol exchanges since the gNB can update the initially assigned TA value of a UE via MAC-CE. The Timing Advance Command is in the MAC-CE only 6 bits. In this embodiment, the gNB can take into account the added R value to avoid reception errors of message 3 of the RACH procedure (and later messages) by making suitable scheduling choices that take into account the actual TA value of the UE. The reason is that the UE will use a TA value that is not accurate - due to the addition of R -- and thus, this might lead to a situation in which two frames of two UEs arrive simultaneously at the gNB, e.g., one of the frames might be message 3 of the UE and another frame might be an uplink message from other UE. Since the gNB is aware of the assigned R value, the gNB can adapt its resource allocation schedule to those two UEs to avoid a frame collision.

Above embodiments also apply in a 2-step RACH when messages 1 and 3 are combined into a single message A from UE to gNB and messages 2 and 4 are combined into a single message B from gNB to UE.

Furthermore, the underlying principles also apply to other wireless systems in 3GPP and other standardization bodies. For instance, 3GPP is studying the usage of relay devices such as UEs or base stations in integrated access backhauled (IAB) networks to extend the range. In such use cases, a MitM attacker could also be located, e.g., between a remote UE and a relay UE. The MitM attacker can be detected and avoided in those settings by means of the proposed or similar techniques.

Moreover, the proposed techniques for a secure random-access procedure can be implemented in all types of wireless networks where such an access process might be used. E.g., it can be applied to devices communicating using cellular wireless communication standards, specifically the 3^{rd} Generation Partnership Project (3GPP) 5G or 6G specifications.

Thus, the wireless communication devices can be different types of devices, e.g. mobile phones, vehicles (for vehicle-to-vehicle (V2V) communication or more general vehicle-to-everything (V2X) communication), V2X devices, IoT hubs, loT devices, including low-power medical sensors for health monitoring, medical (emergency) diagnosis and treatment devices, for hospital use or first-responder use, virtual reality (VR) headsets, etc. The access devices might be base stations, vehicle mounted base stations where the vehicle might be a maritime, terrestrial or flying vehicle, sattelites, UAVs, etc.

Furthermore, the invention can be applied in medical applications or connected healthcare in which multiple wireless (e.g. 4G/5G) connected sensor or actuator nodes participate, in medical applications or connected healthcare in which a wireless (e.g. 4G/5G) connected equipment consumes or generates occasionally a continuous data stream of a certain average data rate, for example video, ultrasound, X-Ray, Computed Tomography (CT) imaging devices, real-time patient sensors, audio or voice or video streaming devices used by medical staff, in general loT applications involving wireless, mobile or stationary, sensor or actuator nodes (e.g. smart city, logistics, farming, etc.), in emergency services and critical communication applications, in V2X systems, in systems for improved coverage for 5G cellular networks using high-frequency (e.g. mmWave) RF, and any other application areas of 5G communication where relaying is used.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated. Additionally, the expression "at least one of A, B, and C" is to be understood as disjunctive, i.e. as "A and/or B and/or C".

A single unit or device may fulfill the functions of several items recited in the claims. The mere fact that certain measures are recited in mutually different dependent claims does not indicate that a combination of these measures cannot be used to advantage.

The described operations like those indicated in Figs. 1 to 3 can be implemented as program code means of a computer program and/or as dedicated hardware of the related communication device or access device, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. A method of securely performing a random-access procedure between a User Equipment, UE, and an access device in a wireless network, wherein the method comprises:
determining or receiving a cryptographic key K linked to the access device and the UE;
determining or receiving a L-bit sequence s; and
encrypting s with K into V; and
sending V;
wherein the method further comprises determining the cryptographic key K that depends on a physical channel characteristic between user device and access device.

2. The method of Claim 1, wherein the method further comprises receiving a public key associated to the access device.

3. The method of claim 1, wherein the number of bits L of the sequence s is less than k, the number of bits of the value V.

4. The method in claim 1 wherein the number of bits k of the value V is variable and configurable.

5. The method of claim 4, wherein the number of bits k depends on at least one of the number of UEs performing a random-access procedure, the network load, the desired security level, or a policy.

6. The method of claim 1, wherein the mask used to mask the sequence s is determined depending on at least one of the number of UEs performing a random-access procedure, the network load, the desired security level, or a policy.

7. The method in the previous claims, wherein a seed used to determine the mask is signalled along with V.

8. An apparatus for securely performing a random-access procedure wherein the apparatus comprises a transceiver and a control unit, the apparatus arranged to
determine or receive a cryptographic key linked to the access device and the UE;
determine or receive an L-bit sequence s; and
encrypt s with K into V; and
send V;
wherein the cryptographic key K depends on a physical channel characteristic between user device and access device.

9. A network device for a wireless network, comprising an apparatus according to claim 8.

10. A computer program product comprising code adapted to cause when loaded on a wireless device said wireless device to perform the steps of claim 1.

## Patentansprüche

1. Verfahren zum sicheren Durchführen einer Direktzugriffsprozedur zwischen einer Benutzerausrüstung, UE, und einer Zugriffsvorrichtung in einem drahtlosen Netzwerk, wobei das Verfahren Folgendes umfasst:
Bestimmen oder Empfangen eines kryptographischen Schlüssels K, der mit der Vorrichtung und dem UE verknüpft ist;
Bestimmen oder Empfangen einer L-Bit Sequenz s; und
Verschlüsseln von s mit K zu V; und
Senden von V;
wobei das Verfahren weiter Bestimmen des kryptographischen Schlüssels K umfasst, der von einer physikalischen Kanaleigenschaft zwischen der Benutzervorrichtung und der Zugriffsvorrichtung abhängt.

2. Verfahren nach Anspruch 1, wobei das Verfahren weiter Empfangen eines öffentlichen Schlüssels umfasst, der mit der Zugriffsvorrichtung assoziiert ist.

3. Verfahren nach Anspruch 1, wobei die Anzahl der Bits L der Sequenz s kleiner ist als k, die Anzahl der Bits des Wertes V.

4. Verfahren nach Anspruch 1, wobei die Anzahl der Bits k des Wertes V variabel und konfigurierbar ist.

5. Verfahren nach Anspruch 4, wobei die Anzahl der Bits k mindestens von der Anzahl der UEs, die eine Direktzugriffsprozedur durchführen, der Netzwerklast, dem gewünschten Sicherheitslevel oder einer Richtlinie abhängt.

6. Verfahren nach Anspruch 1, wobei die zum Maskieren der Sequenz s verwendete Maske bestimmt wird, abhängig von mindestens einem der Anzahl der UEs, die eine Direktzugriffsprozedur durchführen, der Netzwerklast, dem gewünschten Sicherheitslevel oder einer Richtlinie.

7. Verfahren nach den vorstehenden Ansprüchen, wobei ein Seed, der zum Bestimmen der Maske verwendet wird, zusammen mit V signalisiert wird.

8. Einrichtung zum sicheren Durchführen einer Direktzugriffsprozedur, wobei die Einrichtung einen Transceiver und eine Steuereinheit umfasst, wobei die Einrichtung angeordnet ist zum
Bestimmen oder Empfangen eines kryptographischen Schlüssels, der mit der Zugriffsvorrichtung und der UE verknüpft ist;
Bestimmen oder Empfangen einer L-Bit-Sequenz s; und
Verschlüsseln von s mit K zu V; und
Senden von V;
wobei der kryptografische Schlüssel K von einer physikalischen Kanaleigenschaft zwischen der Benutzervorrichtung und der Zugriffsvorrichtung abhängig ist.

9. Netzwerkvorrichtung für ein drahtloses Netzwerk, umfassend eine Einrichtung gemäß Anspruch 8.

10. Computerprogrammprodukt, umfassend einen Code, der adaptiert ist, um, wenn er auf eine drahtlose Vorrichtung geladen wird, bewirkt, dass die drahtlose Vorrichtung die Schritte von Anspruch 1 durchführt.

## Revendications

1. Procédé permettant d'exécuter de manière sécurisée une procédure d'accès aléatoire entre un équipement d'utilisateur, UE et un dispositif d'accès dans un réseau sans fil, dans lequel le procédé comprend :
la détermination ou la réception d'une clé cryptographique K liée au dispositif d'accès et à l'UE ;
la détermination ou la réception d'une séquence de L bits s ; et
le cryptage de s avec K dans V ; et
l'envoi de V ;
dans lequel le procédé comprend en outre la détermination de la clé cryptographique K qui dépend d'une caractéristique de canal physique entre le dispositif utilisateur et le dispositif d'accès.

2. Procédé selon la revendication 1, dans lequel le procédé comprend en outre la réception d'une clé publique associée au dispositif d'accès.

3. Procédé selon la revendication 1, dans lequel le nombre de L bits de la séquence s est inférieur à k, le nombre de bits de la valeur V.

4. Procédé selon la revendication 1, dans lequel le nombre de k bits de la valeur V est variable et configurable.

5. Procédé selon la revendication 4, dans lequel le nombre de k bits dépend d'au moins l'un du nombre d'UE exécutant une procédure d'accès aléatoire, de la charge du réseau, du niveau de sécurité souhaité ou d'une politique.

6. Procédé selon la revendication 1, dans lequel le masque utilisé pour masquer la séquence s est déterminé en fonction d'au moins l'un du nombre d'UE exécutant une procédure d'accès aléatoire, de la charge du réseau, du niveau de sécurité souhaité ou d'une politique.

7. Procédé selon les revendications précédentes, dans lequel une graine utilisée pour déterminer le masque est signalée avec V.

8. Appareil permettant d'exécuter de manière sécurisée une procédure d'accès aléatoire, dans lequel l'appareil comprend un émetteur-récepteur et une unité de commande, l'appareil étant agencé pour
déterminer ou recevoir une clé cryptographique liée au dispositif d'accès et à l'UE ;
déterminer ou recevoir une séquence de L bits s ; et
crypter s avec K dans V ; et
envoyer V ;
dans lequel la clé cryptographique K dépend d'une caractéristique de canal physique entre le dispositif utilisateur et le dispositif d'accès.

9. Dispositif de réseau pour un réseau sans fil, comprenant un appareil selon la revendication 8.

10. Produit de programme informatique comprenant un code adapté pour provoquer, lorsqu'il est chargé sur un dispositif sans fil, l'exécution des étapes de la revendication 1 par ledit dispositif sans fil.
